# EUROPÄISCHE PATENTSCHRIFT

(11) **EP 3 074 290 B1**
(45) Veröffentlichungstag und Bekanntmachung des Hinweises auf die Patenterteilung: **21.07.2021**
(21) Anmeldenummer: 13802281.9
(22) Anmeldetag: 25.11.2013
(51) Int. Cl.: B60W 40/04, B60W 50/00, G01C 21/34, B60W 40/06, B60W 50/08, B60W 30/14, B60K 31/00, G05D 1/02

(54) **VERFAHREN UND VORRICHTUNG ZUM BETREIBEN EINES FAHRZEUGS**
METHOD AND DEVICE FOR OPERATING A VEHICLE
PROCÉDÉ ET DISPOSITIF PERMETTANT DE FAIRE FONCTIONNER UN VÉHICULE

(43) Veröffentlichungstag der Anmeldung: 05.10.2016
(73) Patentinhaber: Robert Bosch GmbH, 70442 Stuttgart (DE)
(72) Erfinder: JOHANNABER, Martin, 71282 Hemmingen (DE); STEIN, Stefan, 70563 Stuttgart (DE)
(86) Internationale Anmeldenummer: PCT/EP2013/074602
(87) Internationale Veröffentlichungsnummer: WO 2015/074724

(56) Entgegenhaltungen:
- DE-A1-102004 051 963
- DE-A1-102008 035 944
- US-A1- 2012 101 698

## Beschreibung

Die Erfindung betrifft ein Verfahren und eine Vorrichtung zum Betreiben eines Fahrzeugs, insbesondere zur Beeinflussung einer automatischen Geschwindigkeitsregelung des Fahrzeugs. Die Erfindung betrifft ferner ein Computerprogramm.

### Stand der Technik

Die Offenlegungsschrift DE 10 2008 035 944 A1 zeigt ein Verfahren zum Optimieren des Fahrbetriebs eines Kraftfahrzeugs.

Die Offenlegungsschrift US 2012/101698 A1 zeigt ein Verfahren und eine Vorrichtung zum Steuern eines Fahrzeugs.

Die Offenlegungsschrift DE 10 2004 051 963 A1 zeigt ein Verfahren zur Fahrerunterstützung.

Verfahren zur Optimierung eines Geschwindigkeitsverlaufs abhängig von einem Höhenprofil einer Fahrstrecke sind als solche beispielsweise aus Fröberg, Andreas, "Efficient Simulation an Optimal Control for Vehicle Propulsion", PhD Thesis, Linköping Universität, Schweden 2008, Anders Fröberg, Erik Hellström und Lars Nielsen, "Explicit fuel optimal speed profiles for heavy trucks on a set of topographic road profiles", No. 2006-01-1071 in SAE World Congress, 2006 und F. Lattemann et al., "The Predictive Cruise Control - A System to Reduce Fuel Consümption of Heavy Duty Trucks", SAE Technical Paper Series, 2004 bekannt. Insbesondere kann hier vorgesehen sein, dass der optimierte Geschwindigkeitsverlauf derart berechnet wird, dass ein Kraftstoffverbrauch des Fahrzeugs für die Fahrstrecke minimiert wird.

Nachteilig an den bekannten Verfahren ist insbesondere, dass diese einen bisherigen Fahrtverlauf nicht berücksichtigen, so dass beispielsweise bei Verzögerungen durch einen Stau es zu einer späteren Ankunftszeit als die ursprünglich berechnete Ankunftszeit kommen kann.

### Offenbarung der Erfindung

Die der Erfindung zugrunde liegende Aufgabe kann daher darin gesehen werden, ein Verfahren und eine Vorrichtung zum Betreiben eines Fahrzeugs anzugeben, welche die bekannten Nachteile überwinden und für eine Berechnung einer Fahrstrategie Verzögerungen berücksichtigen können.

Die der Erfindung zugrunde liegende Aufgabe kann auch darin gesehen werden, ein entsprechendes Computerprogramm bereitzustellen.

Diese Aufgaben werden mittels des jeweiligen Gegenstands der unabhängigen Ansprüche gelöst. Vorteilhafte Ausgestaltungen sind Gegenstand von jeweils abhängigen Unteransprüchen.

Nach einem Aspekt wird ein Verfahren zum Betreiben eines Fahrzeugs, insbesondere zur Beeinflussung einer automatischen Geschwindigkeitsregelung des Fahrzeugs, bereitgestellt. Hierbei werden für eine Fahrstrecke des Fahrzeugs von einer ersten Position zu einer zweiten Position ein Geschwindigkeitsprofil und eine auf dem Geschwindigkeitsprofil basierende voraussichtliche Ankunftszeit des Fahrzeugs an der zweiten Position berechnet. Es wird ferner während einer Fahrt des Fahrzeugs entlang der Fahrstrecke eine aktualisierte Ankunftszeit basierend auf dem berechneten Geschwindigkeitsprofil bezüglich einer Restfahrstrecke von einer momentanen Fahrzeugposition zu der zweiten Position berechnet. Diese aktualisierte Ankunftszeit wird mit der voraussichtlichen Ankunftszeit verglichen. Abhängig von dem Vergleich wird eine Aktion durchgeführt.

Nach einem anderen Aspekt wird eine Vorrichtung zum Betreiben eines Fahrzeugs, insbesondere zur Beeinflussung einer automatischen Geschwindigkeitsregelung des Fahrzeugs, bereitgestellt. Die Vorrichtung umfasst eine Berechnungseinrichtung zum Berechnen eines Geschwindigkeitsprofils für eine Fahrstrecke des Fahrzeugs von einer ersten Position zu einer zweiten Position. Ferner ist die Berechnungseinrichtung ausgebildet, eine auf dem Geschwindigkeitsprofil basierende voraussichtliche Ankunftszeit des Fahrzeugs an der zweiten Position zu berechnen. Diese voraussichtliche Ankunftszeit kann im Folgenden vorzugsweise als ursprünglich berechnete Ankunftszeit bezeichnet werden. Des Weiteren ist die Berechnungseinrichtung ausgebildet, während einer Fahrt des Fahrzeugs entlang der Fahrstrecke eine aktualisierte Ankunftszeit basierend auf dem berechneten Geschwindigkeitsprofil bezüglich einer Restfahrstrecke von einer momentanen Fahrzeugposition zu der zweiten Position zu berechnen. Ferner ist eine Vergleichseinrichtung zum Vergleichen der aktualisierten Ankunftszeit mit der ursprünglichen Ankunftszeit vorgesehen. Darüber hinaus umfasst die Vorrichtung eine Durchführungseinrichtung zum Durchführen einer Aktion abhängig von dem Vergleich.

Gemäß einem weiteren Aspekt ist ein Computerprogramm bereitgestellt, welches Programmcode zur Ausführung des Verfahrens zum Betreiben eines Fahrzeugs, insbesondere zur Beeinflussung einer automatischen Geschwindigkeitsregelung des Fahrzeugs, umfasst, wenn das Computerprogramm auf einem Computer ausgeführt wird.

Die Erfindung umfasst also insbesondere den Gedanken, während der Fahrt des Fahrzeugs entlang der Fahrstrecke von der ersten Position zu der zweiten Position die Ankunftszeit des Fahrzeugs an der zweiten Position neu zu berechnen, d.h. zu aktualisieren, wobei hier insbesondere diese Berechnung basierend auf dem Geschwindigkeitsprofil für die Restfahrstrecke, also von der momentanen Fahrzeugposition zu der zweiten Position, durchgeführt wird. Hierbei kann vorzugsweise vorgesehen sein, dass zur Berechnung der aktualisierten Ankunftszeit insbesondere eine momentane Uhrzeit verwendet wird. Vorzugsweise kann hierfür die bisherige Fahrdauer bzw. Fahrzeit verwendet werden. Insbesondere kann vorgesehen sein, dass hierfür ein bisheriges tatsächlich gefahrenes Geschwindigkeitsprofil, insbesondere eine mittlere Durchschnittsgeschwindigkeit auf der zurückgelegten Strecke, also von der ersten Position bis zu der momentanen Fahrzeugposition, verwendet wird.

Dies ermöglicht in vorteilhafter Weise, dass beispielsweise Verzögerungen, beispielsweise ein Stau, berücksichtigt werden können, so dass in vorteilhafter Weise überprüft werden kann, ob die ursprünglich berechnete Ankunftszeit noch eingehalten werden kann. Aufgrund des Vergleichs und der entsprechend abhängigen Aktion kann in vorteilhafter Weise adäquat auf Verzögerungen reagiert werden.

Gemäß einer Ausführungsform können Bedingungen bzw. Streckenparameter der vorausliegenden Strecke, also der noch zu fahrenden Strecke von der momentanen Fahrzeugposition zu der zweiten Position, (z.B. durch verfügbare Stauinformationen) und/oder Änderungen der vorausliegenden Streckenbedingungen bzw. Streckenparameter berücksichtigt bzw. erfasst werden, so dass in vorteilhafter Weise bereits im Voraus eine angemessene bzw. adäquate Aktion ausgeführt bzw. durchgeführt werden kann wie beispielsweise eine Berechnung eines entsprechend angepassten Geschwindigkeitsprofils, also eines aktualisierten Geschwindigkeitsprofils, bzw. einer entsprechend angepassten Fahrstrategie, so dass beispielsweise eine neu aktualisierte Ankunftszeit basierend auf dem aktualisierten Geschwindigkeitsprofil bzw. der angepassten Fahrstrategie der ursprünglich berechneten Ankunftszeit entspricht.

Bedingungen bzw. Streckenparameter können beispielsweise Informationen umfassend betreffend einen Stau, eine Baustelle, Wetterinformationen bezüglich der vorausliegenden Strecke wie beispielsweise Nässe, Regen, Glätte, Schnee oder Eis. Solche Informationen bzw. Bedingungen oder Streckenparameter können beispielsweise aktiv abgefragt werden und/oder können insbesondere automatisch an das Fahrzeug gesendet werden.

In einer anderen Ausführungsform kann vorgesehen sein, dass die Vorrichtung und/oder das Verfahren für eine Beeinflussung einer automatischen Geschwindigkeitsregelung des Fahrzeugs verwendet werden. Das heißt also insbesondere, dass die Vorrichtung ausgebildet sein kann, gemäß dem Verfahren eine automatische Geschwindigkeitsregelung zu beeinflussen.

Gemäß einer Ausführungsform kann vorgesehen sein, dass mehrere Aktionen durchgeführt werden. Die Aktionen können gleich oder unterschiedlich gebildet sein.

In einer anderen Ausführungsform kann vorgesehen sein, dass, wenn die aktualisierte Ankunftszeit früher oder später ist als die voraussichtliche Ankunftszeit, als Aktion ein aktualisiertes Geschwindigkeitsprofil für die Restfahrstrecke berechnet wird, so dass eine auf dem aktualisierten Geschwindigkeitsprofil basierende neu aktualisierte Ankunftszeit der voraussichtlichen Ankunftszeit entspricht. Dadurch wird in vorteilhafter Weise bewirkt, dass das Fahrzeug zu der ursprünglichen, also zu der voraussichtlichen, Ankunftszeit sein Fahrziel, also die zweite Position, erreicht, wenn das Fahrzeug für die Restfahrstrecke entsprechend dem aktualisierten Geschwindigkeitsprofil mit der entsprechenden Geschwindigkeit fährt.

So kann beispielsweise vorgesehen sein, dass das Geschwindigkeitsprofil entsprechend einem minimierten Kraftstoffverbrauch für die Fahrstrecke berechnet wurde. Wenn nun festgestellt wird, dass die aktualisierte Ankunftszeit später ist als die voraussichtliche Ankunftszeit, so kann vorzugsweise vorgesehen sein, dass das aktualisierte Geschwindigkeitsprofil für die Restfahrstrecke entsprechend einer minimalen Fahrdauer bzw. Fahrzeit für die Restfahrstrecke berechnet wird, so dass zwar ein Kraftstoffverbrauch nicht mehr minimiert ist, jedoch der Fahrer trotzdem noch die voraussichtliche, also die ursprüngliche, Ankunftszeit einhalten wird.

Ferner kann beispielsweise vorgesehen sein, dass das Geschwindigkeitsprofil entsprechend einem minimierten Kraftstoffverbrauch berechnet wurde. Wenn dann festgestellt wird, dass die aktualisierte Ankunftszeit früher ist als die voraussichtliche Ankunftszeit, so kann beispielsweise das aktualisierte Geschwindigkeitsprofil entsprechend einem noch geringeren Kraftstoffverbrauch relativ zu ursprünglich minimierten Kraftstoffverbrauch berechnet werden, da in dieser Situation ausreichend Zeit, also ein Zeitpuffer, vorliegt, um beispielsweise langsamer als ursprünglich geplant zu fahren, wobei aufgrund des Zeitpuffers trotzdem die ursprüngliche, also die voraussichtliche, Ankunftszeit erreicht wird. Gleichzeitig wird hier in vorteilhafter Weise noch mehr Kraftstoff eingespart.

Gemäß einer weiteren Ausführungsform kann vorgesehen sein, dass eine Fahrzeuggeschwindigkeit entsprechend dem Geschwindigkeitsprofil automatisch geregelt wird und als Aktion eine Anfrage ausgegeben wird, ob die automatische Regelung deaktiviert werden soll oder nicht. Dadurch wird in vorteilhafter Weise dem Fahrer die Entscheidung überlassen, ob die Fahrzeuggeschwindigkeit weiter entsprechend dem Geschwindigkeitsprofil automatisch geregelt wird oder ob er diese automatische Regelung deaktivieren will, so dass er anschließend insbesondere eine höhere Fahrzeuggeschwindigkeit wählen kann, um noch die ursprüngliche Ankunftszeit einzuhalten. In der Regel weiß der Fahrer am besten, ob es in der spezifischen Situation sinnvoll ist, entsprechend dem Geschwindigkeitsprofil oder dem aktualisierten Geschwindigkeitsprofil weiterzufahren.

Nach einer anderen Ausführungsform kann vorgesehen sein, dass als Aktion eine andere Anfrage ausgegeben wird, ob die Fahrzeuggeschwindigkeit entsprechend dem aktualisierten Geschwindigkeitsprofil automatisch geregelt werden soll. Dadurch wird in vorteilhafter Weise der Fahrer in die Lage versetzt, selbständig zu entscheiden, welche Aktionen für die konkrete Verkehrssituation optimal ist.

Nach einer weiteren Ausführungsform kann vorgesehen sein, dass eine Fahrzeuggeschwindigkeit entsprechend dem Geschwindigkeitsprofil geregelt wird und wobei als Aktion nach dem Vergleich die Fahrzeuggeschwindigkeit entsprechend dem aktualisierten Geschwindigkeitsprofil automatisch geregelt wird. Dadurch wird in vorteilhafter Weise ein Fahrer von der Entscheidung entlastet, ob die Regelung deaktiviert werden soll oder nicht, bzw. ob eine andere Regelung entsprechend dem aktualisierten Geschwindigkeitsprofil vorgenommen werden soll. Aufgrund dieser Entlastung kann der Fahrer sich in vorteilhafter Weise besonders aufmerksam auf den Verkehr konzentrieren.

Gemäß einer weiteren Ausführungsform kann vorgesehen sein, dass das aktualisierte Geschwindigkeitsprofil entsprechend einem minimalen Fortbewegungsenergieverbrauch des Fahrzeugs oder entsprechend einer minimalen Fahrzeit, also einer minimalen Fahrdauer, für die Restfahrstrecke berechnet werden. Mit dem Begriff "Fortbewegungsenergieverbrauch" ist insbesondere ein Verbrauch an elektrischer Energie bei einem Fahrzeug umfassend einen elektrischen Antrieb gemeint. Insbesondere umfasst der Begriff "Fortbewegungsenergieverbrauch" einen Verbrauch an Kraftstoff für ein Fahrzeug umfassend einen Verbrennungsmotor. Wenn in den vorherigen Absätzen bzw. in den folgenden Absätzen von einem Kraftstoffverbrauch die Rede ist, so soll hier ausdrücklich auch der Fall eines Verbrauchs an elektrischer Energie umfasst sein. Allgemein kann das Fahrzeug als ein Lastkraftwagen, ein Personenkraftwagen, ein Motorrad, ein Moped oder ein Mofa gebildet sein. Das Fahrzeug umfasst insbesondere einen Verbrennungsmotor und/oder einen Elektromotor.

Nach einer weiteren Ausführungsform kann vorgesehen sein, dass eine weitere Anfrage ausgegeben wird, ob die automatische Regelung der Fahrzeuggeschwindigkeit basierend auf dem aktualisierten Geschwindigkeitsprofil entsprechend dem minimalen Fortbewegungsenergieverbrauch oder basierend auf dem aktualisierten Geschwindigkeitsprofil entsprechend der minimalen Fahrzeit für die Restfahrstrecke berechnet werden soll. Der Fahrer wird insofern in vorteilhafter Weise in die Lage versetzt zu entscheiden, was ihm wichtiger ist: minimale Restfahrdauer oder minimaler Kraftstoffverbrauch.

In einer nicht beanspruchten Ausführungsform kann vorgesehen sein, dass das Geschwindigkeitsprofil eine mittlere Referenz-Reisegeschwindigkeit aufweist, wobei ferner ein die mittlere Referenz-Reisegeschwindigkeit umfassender Geschwindigkeitskorridor vorgesehen ist.

Vorzugsweise kann die Fahrzeuggeschwindigkeit auf Geschwindigkeitswerte innerhalb des Geschwindigkeitskorridors geregelt werden, wobei beispielsweise vorgesehen sein kann, dass die tatsächliche mittlere Fahrzeuggeschwindigkeit der mittleren Referenz-Reisegeschwindigkeit entspricht.

Die Erfindung wird im Folgenden anhand von bevorzugten Ausführungsbeispielen unter Bezugnahme auf Figuren näher erläutert. Hierbei zeigen:
Figur 1 ein Ablaufdiagramm eines Verfahrens zum Betreiben eines Fahrzeugs;
Figur 2 eine Vorrichtung zum Betreiben eines Fahrzeugs; und
Figur 3 ein Ablaufdiagramm eines weiteren Verfahrens zum Betreiben eines Fahrzeug.

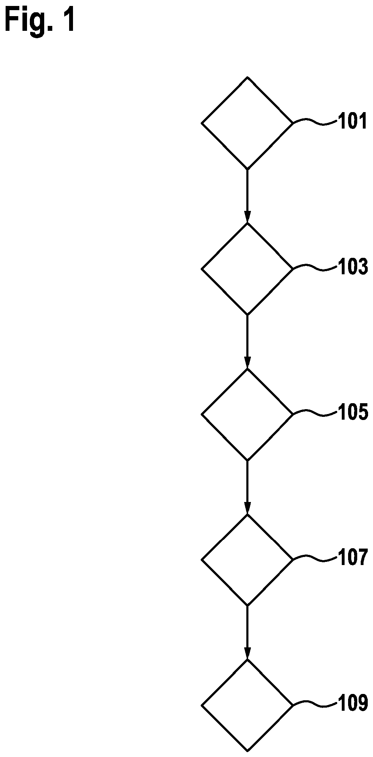

Figur 1 zeigt ein Verfahren zum Betreiben eines Fahrzeugs.

Gemäß einem Schritt 101 wird ein Geschwindigkeitsprofil für eine Fahrstrecke des Fahrzeugs von einer ersten Position zu einer zweiten Position berechnet. Gemäß einem Schritt 103 wird ferner eine auf dem Geschwindigkeitsprofil basierende voraussichtliche Ankunftszeit des Fahrzeugs an der zweiten Position berechnet. Die beiden Schritte 101 und 103 können vorzugsweise zeitgleich durchgeführt werden.

Gemäß einem Schritt 105 wird während einer Fahrt des Fahrzeugs entlang der Fahrstrecke eine aktualisierte Ankunftszeit basierend auf dem berechneten Geschwindigkeitsprofil bezüglich einer Restfahrstrecke von einer momentanen Fahrzeugposition zu der zweiten Position berechnet. Es findet dann ein Vergleich gemäß einem Schritt 107 zwischen der aktualisierten Ankunftszeit und der voraussichtlichen Ankunftszeit statt. Abhängig von dem Vergleich gemäß Schritt 107 wird gemäß einem Schritt 109 eine Aktion durchgeführt.

Vorzugsweise kann die Aktion eine Ausgabe eines Hinweises an einen Fahrer umfassen, dass die voraussichtliche Ankunftszeit nicht eingehalten werden kann. Insbesondere kann vorgesehen sein, dass als Aktion ein aktualisiertes Geschwindigkeitsprofil für die Restfahrstrecke berechnet wird, so dass eine auf dem aktualisierten Geschwindigkeitsprofil basierende neu aktualisierte Ankunftszeit der voraussichtlichen Ankunftszeit entspricht. D.h. also insbesondere, dass bei einer automatischen Regelung der Fahrzeuggeschwindigkeit eine entsprechende Fahrstrategie derart gewählt wird, dass der bisherige Streckenverlauf bzw. Fahrverlauf berücksichtigt wird und die Fahrstrategie für die Restfahrstrecke entsprechend angepasst wird, so dass die voraussichtliche Ankunftszeit, also die ursprünglich berechnete, eingehalten werden kann.

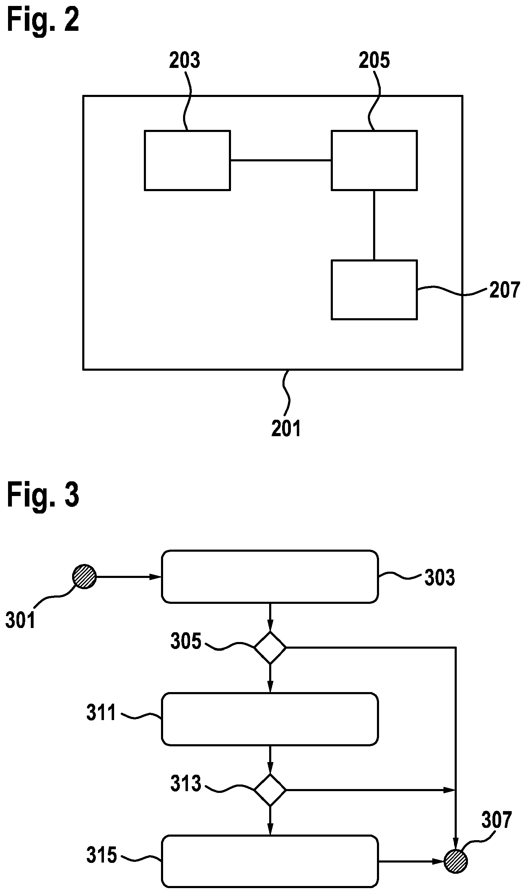

Figur 2 zeigt eine Vorrichtung 201 zum Betreiben eines Fahrzeugs (nicht gezeigt).

Die Vorrichtung 201 umfasst eine Berechnungseinrichtung 203 zum Berechnen eines Geschwindigkeitsprofils für eine Fahrstrecke des Fahrzeugs von einer ersten Position zu einer zweiten Position und zum Berechnen einer auf dem Geschwindigkeitsprofil basierenden voraussichtlichen Ankunftszeit des Fahrzeugs an der zweiten Position. Die Berechnungseinrichtung 203 ist ferner ausgebildet, während einer Fahrt des Fahrzeugs entlang der Fahrstrecke eine aktualisierte Ankunftszeit basierend auf dem berechneten Geschwindigkeitsprofil bezüglich einer Restfahrstrecke von einer momentanen Fahrzeugposition zu der zweiten Position zu berechnen. Ferner umfasst die Vorrichtung 201 eine Vergleichseinrichtung 205 zum Vergleichen der aktualisierten Ankunftszeit mit der ursprünglichen Ankunftszeit. Ferner ist eine Durchführungseinrichtung 207 zum Durchführen einer Aktion abhängig von dem Vergleich vorgesehen.

Die Durchführungseinrichtung 207 kann beispielsweise eine Mensch-Maschinen-Schnittstelle umfassen, um dem Fahrer das Ergebnis des Vergleichs zu signalisieren bzw. mitzuteilen oder optisch und/oder akustisch anzuzeigen. Beispielsweise kann eine solche Mensch-Maschinen-Schnittstelle ausgebildet sein, Anfragen an den Fahrer auszugeben und die entsprechenden Antworten des Fahrers zu erfassen und entsprechend umzusetzen. Die Durchführungseinrichtung 207 kann beispielsweise eine automatische Fahrzeugsgeschwindigkeitsregeleinrichtung umfassen bzw. mit einer solchen verbunden sein, so dass insofern in vorteilhafter Weise eine automatische Regelung einer Fahrzeuggeschwindigkeit basierend auf dem Geschwindigkeitsprofil bzw. dem aktualisierten Geschwindigkeitsprofil ermöglicht ist.

Figur 3 zeigt ein Ablaufdiagramm eines weiteren Verfahrens zum Betreiben eines Fahrzeugs.

Gemäß einem Schritt 301 werden für eine Fahrstrecke des Fahrzeugs von einer ersten Position zu einer zweiten Position ein Geschwindigkeitsprofil und eine auf dem Geschwindigkeitsprofil basierende voraussichtliche Ankunftszeit des Fahrzeugs an der zweiten Position berechnet. In einem folgenden Schritt 303 wird während einer Fahrt des Fahrzeugs entlang der Fahrstrecke eine aktualisierte Ankunftszeit basierend auf dem berechneten Geschwindigkeitsprofil bezüglich einer Restfahrstrecke von einer momentanen Fahrzeugposition zu der zweiten Position berechnet. Hierbei werden insbesondere die bisherige Fahrzeit und/oder ein bisheriger Geschwindigkeitsverlauf des Fahrzeugs berücksichtigt, so dass in vorteilhafter Weise beispielsweise Verzögerungen durch einen Stau berücksichtigt werden können. Es wird hier also insbesondere eine Aussage darüber getroffen, ob das tatsächliche Geschwindigkeitsprofil des Fahrzeugs auf der bisher zurückgelegten Fahrstrecke dem Geschwindigkeitsprofil entspricht, welches gemäß dem Schritt 301 berechnet wurde.

In einem Schritt 305 findet dann ein Vergleich zwischen der aktualisierten Ankunftszeit und der voraussichtlichen Ankunftszeit statt. Das heißt also insbesondere, dass geprüft wird, ob die aktualisierte Ankunftszeit früher oder später ist als die voraussichtliche Ankunftszeit.

Sofern gemäß dem Schritt 305 festgestellt wird, dass das Fahrzeug die voraussichtliche Ankunftszeit einhalten kann, wobei hier beispielsweise ganz allgemein, losgelöst von diesem konkreten Ausführungsbeispiel, eine vorbestimmte zeitliche Abweichung zulässig sein kann, endet das Verfahren in einem Schritt 307. Hierbei kann vorgesehen sein, dass nach dem Schritt 307 das Verfahren beim Schritt 303 fortgesetzt wird.

Sofern gemäß Schritt 305 festgestellt wird, dass die aktualisierte Ankunftszeit größer bzw. später ist als die voraussichtliche Ankunftszeit, wird gemäß einem Schritt 311 eine Anfrage ausgegeben, ob ein aktualisiertes Geschwindigkeitsprofil entsprechend einem minimalen Kraftstoffverbrauch oder entsprechend einer minimalen Fahrzeit für die Restfahrstrecke berechnet werden soll.

In einem Schritt 313 wird die entsprechende Eingabe des Fahrers erfasst und ausgewertet, wobei, wenn der Fahrer die Priorität auf einem minimalen Kraftstoffverbrauch setzt, an der Fahrstrategie keine Änderung notwendig ist. Das heißt also insbesondere, dass das Geschwindigkeitsprofil gemäß Schritt 301 nicht aktualisiert werden muss. Das Verfahren wird insofern gemäß Schritt 307 fortgesetzt bzw. dort beendet oder insbesondere gemäß Schritt 303 fortgesetzt.

Sofern der Fahrer sich aber entscheidet, dass für die Restfahrstrecke die Priorität auf einer minimalen Fahrzeit gelegt werden soll, wird gemäß Schritt 315 ein aktualisiertes Geschwindigkeitsprofil entsprechend der minimalen Fahrzeit für die Restfahrstrecke berechnet. Das heißt also insbesondere, dass die bisherige Fahrstrategie geändert wird. Das Verfahren wird dann im Schritt 307 fortgesetzt bzw. kann gemäß Schritt 303 fortgesetzt werden.

Bei den vorgenannten Schritten bezüglich einer Berechnung eines Geschwindigkeitsprofils bzw. bezüglich eines aktualisierten Geschwindigkeitsprofils bzw. ganz allgemein losgelöst von dem konkreten Ausführungsbeispiel kann insbesondere vorgesehen sein, dass die Fahrzeuggeschwindigkeit automatisch entsprechend dem Geschwindigkeitsprofil bzw. dem aktualisierten Geschwindigkeitsprofil geregelt wird. Vorzugsweise kann vorgesehen sein, dass das entsprechende Geschwindigkeitsprofil bzw. aktualisierte Geschwindigkeitsprofil dem Fahrer optisch, akustisch und/oder haptisch vermittelt bzw. angezeigt wird, so dass der Fahrer die Fahrzeuggeschwindigkeit manuell entsprechend dem Geschwindigkeitsprofil bzw. dem aktualisierten Geschwindigkeitsprofil regeln bzw. einstellen kann.

## Patentansprüche

1. Verfahren zum Betreiben eines Fahrzeugs, wobei für eine Fahrstrecke des Fahrzeugs von einer ersten Position zu einer zweiten Position ein Geschwindigkeitsprofil und eine auf dem Geschwindigkeitsprofil basierende voraussichtliche Ankunftszeit des Fahrzeugs an der zweiten Position berechnet werden (301), **dadurch gekennzeichnet, dass** während einer Fahrt des Fahrzeugs entlang der Fahrstrecke eine aktualisierte Ankunftszeit basierend auf dem berechneten Geschwindigkeitsprofil bezüglich einer Restfahrstrecke von einer momentanen Fahrzeugposition zu der zweiten Position berechnet (303) und mit der voraussichtlichen Ankunftszeit verglichen (305) wird, wobei abhängig von dem Vergleich eine Aktion durchgeführt wird (311).

2. Verfahren nach Anspruch 1, wobei, wenn die aktualisierte Ankunftszeit früher oder später ist als die voraussichtliche Ankunftszeit, als Aktion ein aktualisiertes Geschwindigkeitsprofil für die Restfahrstrecke berechnet wird, so dass eine auf dem aktualisierten Geschwindigkeitsprofil basierende neu aktualisierte Ankunftszeit der voraussichtlichen Ankunftszeit entspricht.

3. Verfahren nach Anspruch 1 oder 2, wobei basierend auf Informationen über Bedingungen der vorausliegenden Strecke und/oder einer Änderung der Bedingungen der vorausliegenden Strecke ein aktualisiertes Geschwindigkeitsprofil berechnet wird, so dass eine neu aktualisierte Ankunftszeit der voraussichtlichen Ankunftszeit entspricht.

4. Verfahren nach einem der vorherigen Ansprüche, wobei eine Fahrzeuggeschwindigkeit entsprechend dem Geschwindigkeitsprofil automatisch geregelt wird und als Aktion eine Anfrage ausgegeben wird, ob die automatische Regelung deaktiviert werden soll oder nicht.

5. Verfahren nach einem der vorherigen Ansprüche und Anspruch 2, wobei als Aktion eine andere Anfrage ausgegeben wird, ob die Fahrzeuggeschwindigkeit entsprechend dem aktualisierten Geschwindigkeitsprofil automatisch geregelt werden soll.

6. Verfahren nach Anspruch 2, wobei eine Fahrzeuggeschwindigkeit entsprechend dem Geschwindigkeitsprofil geregelt wird und wobei als Aktion nach dem Vergleich die Fahrzeuggeschwindigkeit entsprechend dem aktualisierten Geschwindigkeitsprofil automatisch geregelt wird.

7. Verfahren nach einem der vorherigen Ansprüche, soweit rückbezogen auf Anspruch 2, wobei das aktualisierte Geschwindigkeitsprofil entsprechend einem minimalen Fortbewegungsenergieverbrauch des Fahrzeugs oder entsprechend einer minimalen Fahrzeit für die Restfahrstrecke berechnet wird.

8. Verfahren nach Anspruch 7, soweit rückbezogen auf Anspruch 4, wobei eine weitere Anfrage ausgegeben wird, ob die automatische Regelung der Fahrzeuggeschwindigkeit basierend auf dem aktualisierten Geschwindigkeitsprofil entsprechend dem minimalen Fortbewegungsenergieverbrauch oder basierend auf dem aktualisierten Geschwindigkeitsprofil entsprechend der minimalen Fahrzeit für die Restfahrstrecke berechnet werden soll.

9. Vorrichtung (201) zum Betreiben eines Fahrzeugs, umfassend eine Berechnungseinrichtung (203) zum Berechnen eines Geschwindigkeitsprofils für eine Fahrstrecke des Fahrzeugs von einer ersten Position zu einer zweiten Position und zum Berechnen einer auf dem Geschwindigkeitsprofil basierenden voraussichtlichen Ankunftszeit des Fahrzeugs an der zweiten Position, wobei die Berechnungseinrichtung ferner ausgebildet ist, während einer Fahrt des Fahrzeugs entlang der Fahrstrecke eine aktualisierte Ankunftszeit basierend auf dem berechneten Geschwindigkeitsprofil bezüglich einer Restfahrstrecke von einer momentanen Fahrzeugposition zu der zweiten Position zu berechnen, eine Vergleichseinrichtung (205) zum Vergleichen der aktualisierten Ankunftszeit mit der ursprünglichen Ankunftszeit und eine Durchführungseinrichtung (207) zum Durchführen einer Aktion abhängig von dem Vergleich.

10. Computerprogramm, umfassend Programmcode zur Ausführung des Verfahrens nach einem der Ansprüche 1 bis 8, wenn das Computerprogramm auf einem Computer ausgeführt wird.

## Claims

1. Method for operating a vehicle, wherein a speed profile is calculated (301) for a route of the vehicle from a first position to a second position and a provisional arrival time, based on the speed profile, of the vehicle at the second position is calculated (301), **characterized in that**, during a journey of the vehicle along the route, an updated arrival time is calculated (303) based on the calculated speed profile with respect to a remaining route from a current vehicle position to the second position and compared (305) with the provisional arrival time, wherein an action is performed (311) depending on the comparison.

2. Method according to Claim 1, wherein, when the updated arrival time is earlier or later than the provisional arrival time, an updated speed profile for the remaining route is calculated as action, such that a newly updated arrival time based on the updated speed profile corresponds to the provisional arrival time.

3. Method according to Claim 1 or 2, wherein an updated speed profile is calculated based on information about conditions on the route ahead and/or a change in the conditions on the route ahead, such that a newly updated arrival time corresponds to the provisional arrival time.

4. Method according to one of the preceding claims, wherein a vehicle speed is controlled automatically in accordance with the speed profile and a query as to whether the automatic control should or should not be deactivated is output as action.

5. Method according to one of the preceding claims and Claim 2, wherein another query as to whether the vehicle speed should be controlled automatically in accordance with the updated speed profile is output as action.

6. Method according to Claim 2, wherein a vehicle speed is controlled in accordance with the speed profile and wherein, following the comparison, the vehicle speed is controlled automatically in accordance with the updated speed profile as action.

7. Method according to one of the preceding claims where referring back to Claim 2, wherein the updated speed profile is calculated in accordance with a minimum travel energy consumption of the vehicle or in accordance with a minimum driving time for the remaining route.

8. Method according to Claim 7 where referring back to Claim 4, wherein a further query is output as to whether the automatic control of the vehicle speed should be calculated based on the updated speed profile in accordance with the minimum travel energy consumption or based on the updated speed profile in accordance with the minimum driving time for the remaining route.

9. Device (201) for operating a vehicle, comprising a calculation apparatus (203) for calculating a speed profile for a route of the vehicle from a first position to a second position and for calculating a provisional arrival time, based on the speed profile, of the vehicle at the second position, wherein the calculation apparatus is furthermore designed, during a journey of the vehicle along the route, to calculate an updated arrival time based on the calculated speed profile with respect to a remaining route from a current vehicle position to the second position, a comparison apparatus (205) for comparing the updated arrival time with the original arrival time and a performance apparatus (207) for performing an action depending on the comparison.

10. Computer program comprising program code for executing the method according to one of Claims 1 to 8 when the computer program is executed on a computer.

## Revendications

1. Procédé de conduite d'un véhicule, pour un itinéraire du véhicule d'une première position à une deuxième position, un profil de vitesse et un instant d'arrivée du véhicule à la deuxième position étant calculés (301), lequel instant est estimé sur la base du profil de vitesse, **caractérisé en ce que**, pendant que le véhicule se déplace le long de l'itinéraire, l'instant d'arrivée est calculé (303) sur la base du profil de vitesse calculé par rapport à une distance restant à parcourir d'une position actuelle du véhicule à la deuxième position et comparé (305) à l'instant d'arrivée prévue, une action étant réalisée (311) en fonction de la comparaison.

2. Procédé selon la revendication 1, si l'instant d'arrivée actualisé est antérieur ou postérieur à l'instant d'arrivée prévu, un profil de vitesse actualisé étant calculé en tant qu'action pour la distance restant à parcourir de sorte qu'un instant d'arrivée nouvellement actualisé, basé sur le profil de vitesse actualisé, corresponde à l'instant d'arrivée prévu.

3. Procédé selon la revendication 1 ou 2, un profil de vitesse actualisé étant calculé sur la base d'informations relatives à des conditions de l'itinéraire à venir et/ou d'un changement de conditions de l'itinéraire à venir de sorte qu'un instant d'arrivée nouvellement actualisé corresponde à l'instant d'arrivée prévu.

4. Procédé selon l'une des revendications précédentes, une vitesse de véhicule étant automatiquement régulée conformément au profil de vitesse et une demande étant émise en tant qu'action pour savoir si la régulation automatique doit être désactivée ou non.

5. Procédé selon l'une des revendications précédentes et la revendication 2, une autre demande étant émise en tant qu'action pour savoir si la vitesse du véhicule doit être régulée automatiquement en fonction du profil de vitesse actualisé.

6. Procédé selon la revendication 2, une vitesse de véhicule étant régulée en fonction du profil de vitesse et la vitesse de véhicule étant automatiquement régulée en fonction du profil de vitesse actualisé en tant qu'action après la comparaison.

7. Procédé selon l'une des revendications précédentes, lorsqu'elle fait référence à la revendication 2, le profil de vitesse actualisé étant calculé en fonction d'une consommation d'énergie de déplacement minimale du véhicule ou en fonction d'un temps de déplacement minimal pour la distance restant à parcourir.

8. Procédé selon la revendication 7, lorsqu'elle fait référence à la revendication 4, une autre demande étant émise pour savoir si la régulation automatique de la vitesse de véhicule doit être calculée sur la base du profil de vitesse actualisé correspondant à la consommation d'énergie de déplacement minimale ou sur la base du profil de vitesse actualisé correspondant au temps de déplacement minimal pour la distance restant à parcourir.

9. Dispositif (201) de conduite d'un véhicule, comprenant un dispositif de calcul (203) destiné à calculer un profil de vitesse pour un itinéraire du véhicule d'une première position à une deuxième position et calculer un instant d'arrivée prévu du véhicule à la deuxième position en fonction du profil de vitesse, le dispositif de calcul étant en outre conçu pour calculer un instant d'arrivée actualisé sur la base du profil de vitesse calculé par rapport à une distance restant à parcourir d'une position actuelle du véhicule à la deuxième position pendant que le véhicule se déplace le long de l'itinéraire, un dispositif de comparaison (205) destiné à comparer l'instant d'arrivée actualisé à l'instant d'arrivée initial et un moyen d'exécution (207) destiné à exécuter une action en fonction de la comparaison.

10. Logiciel comprenant un code de programme destiné à la mise en œuvre du procédé selon l'une des revendications 1 à 8, lorsque le logiciel est exécuté sur un ordinateur.
